# EUROPÄISCHE PATENTSCHRIFT

(11) **EP 0 940 445 B1**
(45) Veröffentlichungstag und Bekanntmachung des Hinweises auf die Patenterteilung: **05.09.2001**
(21) Anmeldenummer: 98124459.3
(22) Anmeldetag: 23.12.1998
(51) Int. Cl.: C08L 83/04, C08J 3/20

(54) **Verfahren zur kontunierlichen Herstellung von mit Feuchtigkeit vernetzbaren Organopolysiloxanmassen**
Process for the continous production of moisture curable organopolysiloxane compositions
Procédé de fabrication en continu des compositions de organopolysiloxanes, vulcanisables à l'humidité

(30) Priorität: 05.03.1998 DE 19809548
(43) Veröffentlichungstag der Anmeldung: 08.09.1999
(73) Patentinhaber: Wacker-Chemie GmbH, 81737 München (DE)
(72) Erfinder: Braun, Rudolf, Dr., 84556 Kastl (DE); Wöhrl, Helmut, 84503 Altötting (DE); Trajer, Werner, 84489 Burghausen (DE); Steiner, Johann, 84558 Kirchweihdach (DE); Felber, Thomas, 84489 Burghausen (DE)
(74) Vertreter: Fritz, Helmut, Dr.

(56) Entgegenhaltungen:
- EP-A- 0 234 226
- DE-A- 4 103 602
- GB-A- 1 174 219

## Beschreibung

Die Erfindung betrifft ein dreistufiges Verfahren zur kontinuierlichen Herstellung von RTV-1-Massen.

Organopolysiloxanmassen, die unter Ausschluß von Feuchtigkeit lagerfähig sind und unter Zutritt von Feuchtigkeit bei Raumtemperatur vernetzen, sog. RTV-1-Massen, sind bereits seit langem bekannt.

Bei der Herstellung der RTV-1-Massen können nicht alle Bestandteile in einem Schritt zugegeben werden, sondern es sind nach der Vermischung eines Teils der Bestandteile gewisse Reaktionszeiten notwendig, bevor weitere Bestandteile zugemischt werden. Zu diesem Zweck sind zweistufige Verfahren entwickelt worden. Beispielsweise werden in der EP-A-234 226 in einem ersten Schritt ein Teil der Bestandteile in einem kontinuierlich arbeitenden geschlossenen Mischer vereinigt und in einem zweiten Schritt in einem oszillierenden Pilgerschrittkneter die restlichen Bestandteile zudosiert und die Masse in diesem Kneter homogenisiert und unter vermindertem Druck entgast.

RTV-1-Massen werden für verschiedene Anwendungen zu vielen unterschiedlichen Produkten abgemischt, die sich beispielsweise in Farbe, Transparenz oder Viskositäten unterscheiden. Bei Änderung des Produkts, beispielsweise bei einem Farbwechsel, muß im Verfahren der EP-A-234 226 der gesamte Pilgerschrittkneter gereinigt oder zumindest mit der Masse der geänderten Rezeptur großzügig gespült werden. Dies bringt große Verluste mit sich.

Der Erfindung liegt die Aufgabe zugrunde, ein Verfahren zur kontinuierlichen Herstellung von RTV-1-Massen bereitzustellen, bei dem eine Rezepturänderung möglichst geringe Verluste an Zeit und RTV-1-Masse bedingt.

Gegenstand der Erfindung ist ein dreistufiges Verfahren zur kontinuierlichen Herstellung von RTV-1-Massen, bei dem
in einem ersten Schritt eine Rohmischung aus α,ω-Dihydroxypolydiorganosiloxan, Füllstoff und gegebenenfalls weiteren Bestandteilen hergestellt wird,
in einem zweiten Schritt die Rohmischung unter vermindertem Druck von Gaseinschlüssen befreit und gegebenenfalls mit weiteren Bestandteilen vermischt wird und
in einem dritten Schritt die entgaste Rohmischung mit noch nicht im ersten und zweiten Schritt zugegebenem Vernetzer, Kondensationskatalysator und gegebenenfalls zusätzlichen Bestandteilen vermischt wird.

Die Erfindung beruht auf der Erkenntnis, daß der Entgasungsschritt nicht erst nach Vermischen aller Bestandteile erfolgen muß, sondern bereits nach Vermischen von α,ω-Dihydroxypolydiorganosiloxan und Füllstoff vorgezogen werden kann. Die Produktqualität ist dabei genau so gut, wie wenn erst nach Vermischen aller Bestandteile entgast wird.

Dadurch können im dritten Schritt einfache Mischvorrichtungen eingesetzt werden, die ein geringes Volumen aufweisen und leicht durch Durchspülen zu reinigen sind.

Das α,ω-Dihydroxypolydiorganosiloxan weist vorzugsweise die allgemeine Formel (I)

HO-[R₂SiO]ₘ-H (I),

auf, worin
- **R**: einwertige, gegebenenfalls mit Fluor-, Chlor-, Brom-, C₁-C₄-Alkoxyalkyl- oder Cyanogruppen substituierte C₁-C₈-Kohlenwasserstoffreste bedeutet und
- **m**: solche Werte bedeutet, die einer Viskosität des α,ω-Dihydroxypolydiorganosiloxans von 0,05 bis 1000 Pa.s entsprechen.

Beispiele für Kohlenwasserstoffreste R sind lineare und cylische gesättigte und ungesättigte Alkylreste, wie der Methylrest, Arylreste, wie der Phenylrest, Alkarylreste, wie Tolylreste und Aralkylreste, wie der Benzylrest.

Bevorzugt als Rest R sind unsubstituierte Kohlenwasserstoffreste mit 1 bis 6 Kohlenstoffatome, wobei der Methylrest besonders bevorzugt ist.

Die α,ω-Dihydroxypolydiorganosiloxane besitzen vorzugsweise eine Viskosität von 100 bis 700000 mPa.s, insbesondere von 20000 bis 350000 mPa.s, jeweils gemessen bei 23° C.

Beispiele für Füllstoffe, welche in die RTV-1-Massen eingemischt werden, sind nicht verstärkende Füllstoffe, also Füllstoffe mit einer BET-Oberfläche von bis zu 50 m²/g, wie Quarz, Kreide, Diatomeenerde, Calciumsilikat, Zirkoniumsilikat, Zeolithe, Metalloxidpulver, wie Aluminium-, Titan-, Eisen-, oder Zinkoxide bzw. deren Mischoxide, Bariumsulfat, Calciumcarbonat, Gips, Siliciumnitrid, Siliciumcarbid, Bornitrid, Glas- und Kunststoffpulver, wie Polyacrylnitrilpulver; verstärkende Füllstoffe, also Füllstoffe mit einer BET-Oberfläche von mehr als 50 m²/g, wie pyrogen hergestellte Kieselsäure, gefällte Kieselsäure, Ruß, wie Furnace- und Acetylenruß und Silicium-Aluminium-Mischoxide großer BET-Oberfläche; faserförmige Füllstoffe, wie Asbest sowie Kunststoffasern.

Die genannten Füllstoffe können hydrophobiert sein, beispielsweise durch die Behandlung mit Organosilanen bzw. -siloxanen oder mit Stearinsäure oder durch Verätherung von Hydroxylgruppen zu Alkoxygruppen. Es kann eine Art von Füllstoff, es kann auch ein Gemisch von mindestens zwei Füllstoffen eingesetzt werden.

Als Vernetzer eingesetzt werden vorzugsweise Silane, welche mit den Hydroxylgruppen des α,ω-Dihydroxypolydiorganosiloxans kondensierbare Gruppen aufweisen, sowie oligomere Kondensationsprodukte dieser Silane. Insbesondere als Vernetzer eingesetzt werden Silane der allgemeinen Formel(II)

R¹ ₙSiX₍₄₋ₙ₎ (II),

in der
- **R**^{**1**}: einwertige, gegebenenfalls mit Fluor-, Chlor-, Brom-C₁-C₄-Alkoxyalkyl-, Amino-C₁-C₆-alkyl-, Amino-C₁-C₆-alkylenamino- oder Cyanogruppen substituierte C₁-C₁₀-Kohlenwasserstoffreste,
- **X**: Wasserstoff-, Fluor, Chlor- oder Bromatome, C₁-C₄-Alkoxy-, C₁-C₄-Acyloxy-, Amino-, C₁-C₄-Alkylamino-, C₁-C₄-Dialkylamino-, -C₁-C₆-Alkylamido-, -(N-C₁-C₄-Alkyl)-C₁-C₆-alkylamido- oder Si-O-N= gebundene C₃-C₆-Ketoximogruppen und
- **n**: die Werte 0, 1 oder 2 bedeuten.

Beispiele für Kondensationskatalysatoren, welche die Kondensation des Vernetzers mit dem α,ω-Dihydroxypolydiorganosiloxan beschleunigen, sind Amine, organische'Verbindungen von Zinn, Zink, Zirkonium, Titan und Aluminium. Bevorzugt unter diesen Kondensationskatalysatoren sind Butyltitanate und organische Zinnverbindungen, wie Di-n-butylzinndiacetat, Di-n-butylzinndilaurat und Umsetzungsprodukte von je Molekül mindestens zwei über Sauerstoff an Silicium gebundene, gegebenenfalls durch eine Alkoxygruppe substituierte, einwertige Kohlenwasserstoffreste als hydrolysierbare Gruppen aufweisendem Silan oder dessen Oligomer mit Diorganozinndiacylat, wobei in diesen Umsetzungsprodukten alle Valenzen der Zinnatome durch Sauerstoffatome der Gruppierung ≡SiOSn≡ bzw. durch SnC-gebundene, einwertige organische Reste abgesättigt sind.

Bei der Herstellung der RTV-1-Massen könne zusätzliche Bestandteile eingesetzt werden, beispielsweise farbgebende Bestandteile, wie Pigmente und lösliche Farbstoffe, Riechstoffe, Weichmacher, wie bei Raumtemperatur flüssige, durch Trimethylsiloxygruppen endblockierte Dimethylpolysiloxane oder organische Weichmacher, Fungicide, harzartige Organopolysiloxane, einschließlich solcher aus (CH₃)₃SiO_{1/2}- und SiO_{4/2}- Einheiten, rein-organische Harze, wie Homo- oder Mischpolymerisate des Acrylnitrils, Styrols, Vinylchlorids oder Propylens, wobei solche rein-organischen Harze, insbesondere Mischpolymerisate aus Styrol und n-Butylacrylat, bereits in Gegenwart von in den endständigen Einheiten je eine Si-gebundene Hydroxylgruppe aufweisendem Diorganopolysiloxan durch Polymerisation der genannten Monomeren mittels freier Radikale erzeugt worden sein können, Korrosionsinhibitoren, Polyglykole, die verestert und/oder verethert sein können, Oxydationsinhibitoren, Hitzestabilisatoren, Lösungsmittel, Mittel zur Beeinflussung der elektrischen Eigenschaften, wie leitfähiger Ruß, flammabweisend machende Mittel, Lichtschutzmittel und Mittel zur Verlängerung der Hautbildungszeit, wie Silane mit SiC-gebundenen Mercaptoalkylresten, sowie zellenerzeugende Mittel, z.B. Azodicarbonamid. Desgleichen können Haftvermittler, vorzugsweise aminofunktionelle Silane, zugegeben werden.

Als Mischvorrichtungen zur Herstellung der Rohmischung im ersten Schritt eigenen sich kontinuierliche geschlossene Zwangsinnenmischer, insbesondere eine axial durchströmte Mischturbine oder Kneter, wie Ein- oder Zweiwellenkneter, beispielsweise Pilgerschrittkneter. Wird ein Kneter eingesetzt, so braucht dieser keine Entgasungseinrichtung wie Vakuumstutzen zu besitzen.

Als Mischvorrichtungen für den zweiten Schritt eigenen sich vorzugsweise die für den ersten Schritt beschriebenen Kneter, welche eine Entgasungseinrichtung besitzen und unter vermindertem Druck betrieben werden oder Entgasungsapparate. Vorzugsweise beträgt der Innendruck höchstens 10 kPa.

Als Mischvorrichtungen im dritten Schritt eigenen sich vorzugsweise Statikmischer und dynamische Innenmischer.

Der erste Schritt kann aufgeteilt sein in zwei oder mehrere Teilschritte. Beispielsweise kann in einer ersten Mischvorrichtung eine Vormischung aus α,ω-Dihydroxypolydiorganosiloxan, Vernetzer, und Weichmacher hergestellt werden, die dann in einer weiteren Mischvorrichtung mit Füllstoff zur Rohmischung vermischt wird. Die Rohmischung kann auch durch Zudosieren der Bestandteile α,ω-Dihydroxypolydiorganosiloxan und Füllstoff sowie weiterer Bestandteile an verschiedenen Stellen der Mischvorrichtung hergestellt werden.

Der erste Schritt und zweite Schritt können auch in einer Mischvorrichtung längerer Bauart hintereinander durchgeführt werden. Beispielsweise kann im vorderen Bereich eines Wellenkneters die Rohmischung hergestellt werden, welche im hinteren Bereich des Kneters unter vermindertem Druck entgast wird.

Im zweiten Schritt können nichtflüchtige Bestandteile, beispielsweise ein Metallsalz, als Kondensationskatalysator während des Entgasens eingemischt werden.

Im dritten Schritt werden vorzugsweise Haftvermittler und gegebenenfalls farbgebender Bestandteil sowie entweder noch fehlender Vernetzer oder Katalysator zugemischt.

In den nachstehend beschriebenen Beispielen beziehen sich alle Angaben von Teilen mit Prozentsätzen, falls nicht anders angegeben, auf das Gewicht. Desweiteren beziehen sich alle Viskositätsangaben auf eine Temperatur von 25° C.

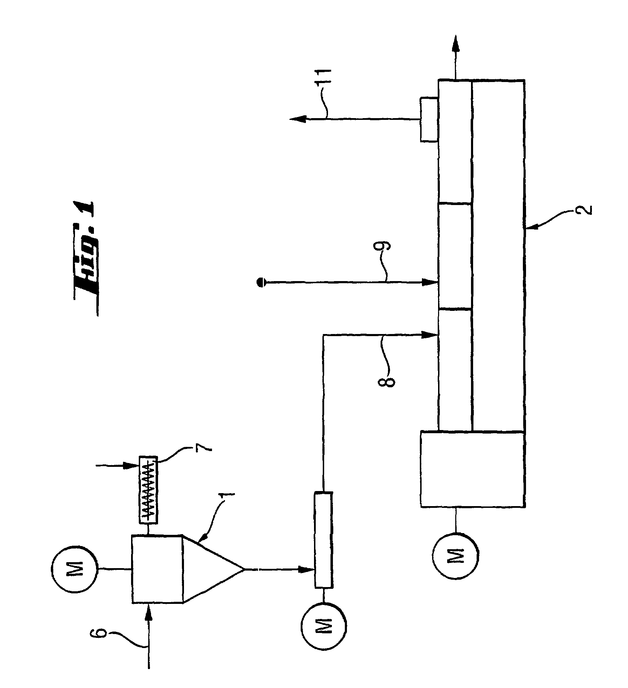

Die Beispiele wurden in Anlagen gemäß Anlagenschemata nach Fig. 1 bis 4 durchgeführt:

### Anlagenschema nach Fig. 1 (nicht erfindungsgemäß):

Mischturbine (1) / oszillierender Einwellenpilgerschrittkneter (2)

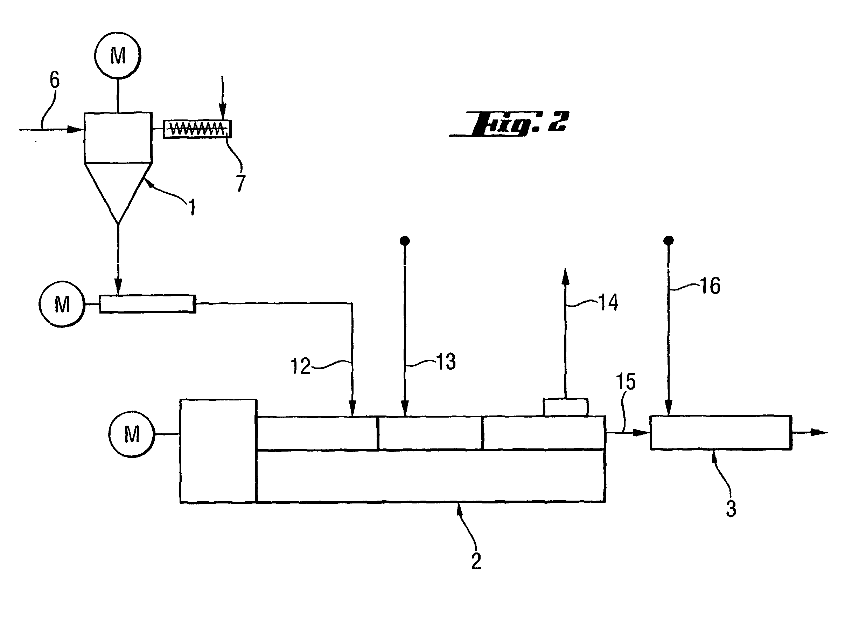

### Anlagenschema nach Fig. 2 (erfindungsgemäß) :

Mischturbine (1) / oszillierender Einwellenpilgerschrittkneter (2) / Statikmischer (3)

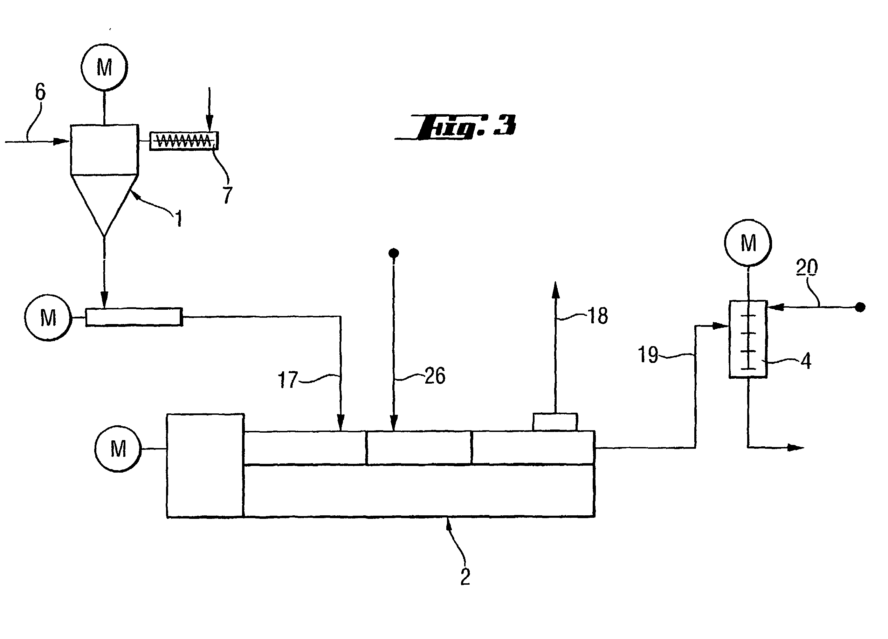

### Anlagenschema nach Fig. 3 (erfindungsgemäß) :

Mischturbine (1) / oszillierender Einwellenpilgerschrittkneter **(2) / Dynamikmischer (4)**

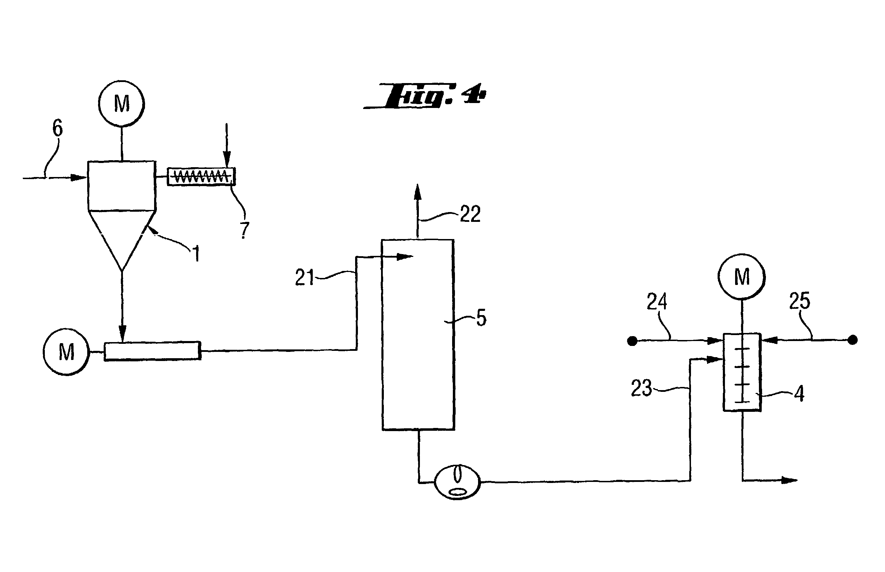

### Anlagenschema nach Fig. 4 (erfindungsgemäß) :

Mischturbine (1) / Entgasungskneter (5) / Dynamikmischer (4)

### Vergleichsbeispiel 1a

### Anlagenschema nach Fig. 1

In die Mischturbine (1) werden über die Einlässe (6) 730 kg/h einer Mischung von 71 % eines α,ω-Dihydroxypolydimethylsiloxans (Viskosität 80000 mm²/s), 23,5 % eines α,ω-Bis-trimethylsiloxypolydimethylsiloxans (Viskosität 100 mm²/s) und 5,5 % eines Oligomerengemisches aus Acetoxysilanen (Vernetzer ES 24 von Wacker-Chemie GmbH, München) dosiert. Weiterhin werden über eine Schnecke (7) 62 kg/h einer pyrogenen Kieselsäure (BET Oberfläche 150 m²/g) in die Mischturbine (1) dosiert. Die Mischturbine (1) wird hierbei mit einer Drehzahl von 1400 U/min : betrieben.

Die Rohmischung wird über Eingang (8) in den oszillierenden Einwellenpilgerschrittkneter (2) überführt. Dort werden über Eingang (9) 0,08 kg/h eines Sn-Katalysators (Katalysator SK von Wacker-Chemie GmbH, München) und über Eingang (10) (nicht in Fig. 1 eingezeichnet) 16 kg/h einer 50 %igen Rußpaste in Siliconöl dosiert. Gase werden aus der RTV-1-Masse über Eingang (11) abgezogen.

Die erhaltene RTV-1-Masse besitzt standfeste Eigenschaften und zeigt Farbwerte gemäß CIE-Lab-System von L*:22, a*:0,0 und b*:-0,3.

### Vergleichsbeispiel 1b

### Anlagenschema nach Fig. 1

Wie im Vergleichsbeispiel 1a wird eine Rohmischung in der Mischturbine (1) hergestellt und über Eingang (8) in den oszillierenden Einwellenpilgerschrittkneter (2) überführt. Dort werden über Eingang (9) 0,08 kg/h eines Sn-Katalysators (Katalysator SK von Wacker-Chemie GmbH, München) und über Eingang (10) 24 kg/h einer 50 %igen Titandioxidpaste in Siliconöl dosiert. Gase werden aus der RTV-1-Masse über Eingang (11) abgezogen.

Die erhaltene RTV-1-Masse besitzt standfeste Eigenschaften und zeigt Farbwerte gemäß CIE-Lab-System von L*:96,5, a*:-0,5 und b*:1,0.

### Vergleichsbeispiel 1c

### Anlagenschema nach Fig. 1

Zunächst wird gemäß Vergleichsbeispiel 1a schwarze RTV-1-Masse hergestellt. Dann wird direkt auf die Rezeptur gemäß Vergleichsbeispiel 1b umgestellt. Nach 8 h wird der Versuch abgebrochen, denn die weiße RTV-1-Masse weist immer noch schwarze Schlieren auf. Um eine reinweiße RTV-1-Masse zu erhalten, muß die Anlage gereinigt werden.

### Beispiel 2a

### Anlagenschema nach Fig. 2

In die Mischturbine (1) werden über die Einlässe (6) 730 kg/h einer Mischung von 71 % eines α,ω-Dihydroxypolydimethylsiloxans (Viskosität 80000 mm²/s), 23,5 % eines α,ω-Bis-trimethylsiloxypolydimethylsiloxans(Viskosität 100 mm²/s) und 5,5 % eines Oligomerengemisches aus Acetoxysilanen (Vernetzer ES 24 von Wacker-Chemie GmbH, München) dosiert. Weiterhin werden über eine Schnecke (7) 62 kg/h einer pyrogenen Kieselsäure (BET Oberfläche 150 m²/g) in die Mischturbine (1) dosiert. Die Mischturbine (1) wird hierbei mit einer Drehzahl von 1400 U/min betrieben.

Die Rohmischung wird über Eingang (12) in den oszillierenden Einwellenpilgerschrittkneter (2) überführt. Dort werden über Eingang (13) 0,08 kg/h eines Sn-Katalysators (Katalysator SK von Wacker-Chemie GmbH, München) dosiert. Gase werden aus der RTV-1-Masse über Eingang (14) abgezogen.

Die entgaste Rohmischung wird über Eingang (15) in den Statikmischer (3) überführt. Über Eingang (16) werden dort 16 kg/h einer 50 %igen Rußpaste in Siliconöl dosiert.

Die erhaltene RTV-1-Masse besitzt standfeste Eigenschaften und zeigt Farbwerte gemäß CIE-Lab-System von L*:22, a*:0,0 und b*:-0,3.

### Beispiel 2b

### Anlagenschema nach Fig. 2

Wie in Beispiel 2a wird eine Rohmischung in der Mischturbine (1) und im Einwellenpilgerschrittkneter (2) hergestellt, entgast und über Eingang (15) in den Statikmischer (3) überführt. Über Eingang (16) werden dort 24 kg/h einer 50 %igen Titandioxidpaste in Siliconöl dosiert.

Die erhaltene RTV-1-Masse besitzt standfeste Eigenschaften und zeigt Farbwerte gemäß CIE-Lab-System von L*:96,5, a*:-0,5 und b*:1,0.

### Beispiel 2c

### Anlagenschema nach Fig. 2

Zunächst wird gemäß Beispiel 2a schwarze RTV-1-Masse hergestellt. Dann wird direkt auf die Rezeptur gemäß Beispiel 2b umgestellt. Nach 3 h weist die RTV-1-Masse die Farbwerte von Beispiel 2b auf.

### Beispiel 3a

### Anlagenschema nach Fig. 3

In die Mischturbine (1) wird über die Einlässe (6) 730 kg/h einer Mischung von 71 % eines α,ω-Dihydroxypolydimethylsiloxans (Viskosität 80000 mm²/s), 23,5 % eines α,ω-Bis-trimethylsiloxypolydimethylsiloxans (Viskosität 100 mm²/s) und 5,5 % eines Oligomerengemisches aus Acetoxysilanen (Vernetzer ES 24 von Wacker-Chemie GmbH, München) dosiert. Weiterhin werden über eine Schnecke (7) 62 kg/h einer pyrogenen Kieselsäure (BET Oberfläche 150 m²/g) in die Mischturbine (1) dosiert. Die Mischturbine (1) wird hierbei mit einer Drehzahl von 1400 U/min betrieben.

Die Rohmischung wird über Eingang (17) in den oszillierenden Einwellenpilgerschrittkneter (2) überführt. Gase werden aus der RTV-1-Masse über Eingang (18) abgezogen.

Die entgaste Rohmischung wird über Eingang (19) in den Dynamikmischer (Aktivmischer) (4) überführt. Dort werden über Eingang (20) 0,08 kg/h eines Sn-Katalysators (Katalysator SK von Wacker-Chemie GmbH, München) und 16 kg/h einer 50 %igen Rußpaste in Siliconöl dosiert.

Die erhaltene RTV-1-Masse besitzt standfeste Eigenschaften und zeigt Farbwerte gemäß CIE-Lab-System von L*:22, a*:0,0 und b*:-0,3.

### Beispiel 3b

### Anlagenschema nach Fig. 3

Wie in Beispiel 3a wird eine Rohmischung in der Mischturbine (1) und im Einwellenpilgerschrittkneter (2) hergestellt, entgast und über Eingang (19) in den Dynamikmischer (Aktivmischer) (4) überführt. Dort werden über Eingang (20) 0,08 kg/h eines Sn-Katalysators (Katalysator SK von Wacker-Chemie GmbH, München) und 24 kg/h einer 50 %igen Titandioxidpaste in Siliconöl dosiert.

Die erhaltene RTV-1-Masse besitzt standfeste Eigenschaften und zeigt Farbwerte gemäß CIE-Lab-System von L*:96,5, a*:-0,5 und b*:1,0.

### Beispiel 3c

### Anlagenschema nach Fig. 3

Zunächst wird gemäß Beispiel 3a schwarze RTV-1-Masse hergestellt. Dann wird direkt auf die Rezeptur gemäß Beispiel 3b umgestellt. Danach werden in 5 Schritten jeweils 10 kg durch den Dynamikmischer (Aktivmischer) (4) gefahren. Pro Schritt wird das Produkt 4-5 min. im Dynamikmischer (Aktivmischer) (4) mit maximaler Drehzahl gerührt. Nach 20 min. weist die RTV-1-Masse die Farbwerte von Beispiel 3b auf. Der Abfall beträgt lediglich 50 kg.

### Beispiel 4a

### Anlagenschema nach Fig. 4

In die Mischturbine (1) wird über die Einlässe (6) 730 kg/h einer Mischung von 71 % eines α,ω-Dihydroxypolydimethylsiloxans (Viskosität 80000 mm²/s), 23,5 % eines α,ω-Bis-trimethylsiloxypolydimethylsiloxans (Viskosität 100 mm²/s) und 5,5 % eines Oligomerengemisches aus Acetoxysilanen (Vernetzer ES 24 von Wacker-Chemie GmbH, München)/dosiert. Weiterhin werden über eine Schnecke (7) 62 kg/h einer pyrogenen Kieselsäure (BET Oberfläche 150 m²/g) in die Mischturbine (1) dosiert. Die Mischturbine (1) wird hierbei mit einer Drehzahl von 1400 U/min betrieben.

Die Rohmischung wird über Eingang (21) in den Entgasungskneter (5) überführt. Gase werden aus der RTV-1-Masse über Eingang (22) abgezogen.

Die entgaste Rohmischung wird über Eingang (23) in den Dynamikmischer (Aktivmischer) (4) überführt. Dort werden über Eingang (24) 0,08 kg/h eines Sn-Katalysators (Katalysator SK von Wacker-Chemie GmbH, München) und über Eingang (25) 16 kg/h einer 50 %igen Rußpaste in Siliconöl dosiert.

Die erhaltene RTV-1-Masse besitzt standfeste Eigenschaften und zeigt Farbwerte gemäß CIE-Lab-System von L*:22, a*:0,0 und b*:-0,3.

### Beispiel 4b

### Anlagenschema nach Fig. 3

Wie in Beispiel 4a wird eine Rohmischung in der Mischturbine (1) und im Entgasungskneter (5) hergestellt, entgast und über Eingang (23) in den Dynamikmischer (Aktivmischer) (4) überführt. Dort werden über Eingang (24) 0,08 kg/h eines Sn-Katalysators (Katalysator SK von Wacker-Chemie GmbH, München) undüber Eingang (25) 24 kg/h einer 50 %igen Titandioxidpaste in Siliconöl dosiert.

Die erhaltene RTV-1-Masse besitzt standfeste Eigenschaften und zeigt Farbwerte gemäß CIE-Lab-System von L*:96,5, a*:-0,5 und b*:1,0.

### Beispiel 4c

### Anlagenschema nach Fig. 4

Zunächst wird gemäß Beispiel 4a schwarze RTV-1-Masse hergestellt. Dann wird direkt auf die Rezeptur gemäß Beispiel 4b umgestellt. Danach werden in 5 Schritten jeweils 10 kg durch den Dynamikmischer (Aktivmischer) (4) gefahren. Pro Schritt wird das Produkt 4-5 min. im Dynamikmischer (Aktivmischer) (4) mit maximaler Drehzahl gerührt. Nach 20 min weist die RTV-1-Masse die Farbwerte von Beispiel 4b auf. Der Abfall beträgt lediglich 50 kg.

### Beispiel 5a

### Anlagenschema nach Fig. 3

In die Mischturbine (1) wird über die Einlässe (6) 705 kg/h einer Mischung bestehend aus wiederum 80 % einer mindestens einen Tag bei RT gelagerten Vormischung von 61 % α,ω-Dihydroxypolydimethylsiloxan (Viskosität 350000 mm²/s), 37 % α,ω-Bis-trimethylsiloxypolydimethylsiloxan (Viskosität 100 mm²/s) und 2 % 3-(Cyclohexylamino)propyl-trimethoxysilan, sowie 16 % eines α,ω-Bis-trimethylsiloxypolydimethylsiloxans (Viskosität 100 mm²/s) und 4 % Vernetzer ET 14 (von Wacker-Chemie GmbH, München), dosiert. Weiterhin werden über eine Schnecke (7) 67 kg/h einer pyrogenen Kieselsäure (BET-Oberfläche 150 m²/g) in die Mischturbine (1) dosiert. Die Mischturbine (1) wird hierbei mit einer Drehzahl von 1400 U/min betrieben.

Die Rohmischung wird über Eingang (17) in den oszillierenden Einwellenpilgerschrittkneter (2) überführt. Dort werden über Eingang (26) 8,0 kg/h eines Sn-Katalysators (Katalysator A 42 von Wacker-Chemie GmbH, München) dosiert. Gase werden aus der RTV-1-Masse über Eingang (18) abgezogen.

Die entgaste Rohmischung wird über Eingang (19) in den Dynamikmischer (Aktivmischer) (4) überführt. Dort werden über Eingänge (20) 16 kg/h eines Aminopropyltriethoxysilans, 3,6 kg/h eines N-(3-(Trimethoxysilyl)propyl)-ethylendiamins und 16 kg/h einer 50 %igen Rußpaste in Siliconöl dosiert.

Die erhaltene RTV-1-Masse besitzt standfeste Eigenschaften und zeigt Farbwerte gemäß CIE-Lab-System von L*:22, a*:0,0 und b*:-0,3.

## Patentansprüche

1. Dreistufiges Verfahren zur kontinuierlichen Herstellung von RTV-1-Massen, bei dem
in einem ersten Schritt eine Rohmischung aus α,ω-Dihydroxypolydiorganosiloxan, Füllstoff und gegebenenfalls weiteren Bestandteilen hergestellt wird,
in einem zweiten Schritt die Rohmischung unter vermindertem Druck von Gaseinschlüssen befreit und gegebenenfalls mit weiteren Bestandteilen vermischt wird und
in einem dritten Schritt die entgaste Rohmischung mit noch nicht im ersten und zweiten Schritt zugegebenem Vernetzer, Kondensationskatalysator und gegebenenfalls zusätzlichen Bestandteilen vermischt wird.

2. Verfahren nach Anspruch 1, bei dem im ersten Schritt kontinuierliche geschlossene Zwangsinnenmischer und/oder Kneter eingesetzt werden.

3. Verfahren nach Anspruch 1 und 2, bei dem im zweiten Schritt Kneter oder Entgasungsapparate eingesetzt werden.

4. Verfahren nach Anspruch 1 bis 3, bei dem im dritten Schritt Dynamikmischer eingesetzt werden.

## Claims

1. Three-stage process for the continuous preparation of RTV-1 compositions, which comprises,
in a first step, preparing a raw mixture of α,ω-dihydroxypolydiorganosiloxane, filler and, if desired, further constituents,
in a second step, freeing the raw mixture of gas inclusions under reduced pressure and, if desired, mixing it with further constituents and,
in a third step, mixing the degassed raw mixture with a crosslinker, a condensation catalyst and, if desired, additional constituents not yet added in the first and second steps.

2. Process according to Claim 1, wherein continuous closed mechanical mixers and/or kneaders are used in the first step.

3. Process according to Claim 1 or 2, wherein kneaders or degassing apparatuses are used in the second step.

4. Process according to any of Claims 1 to 3, wherein dynamic mixers are used in the third step.

## Revendications

1. Procédé en trois étapes pour la préparation en continu de masses RTV-1, dans lequel on prépare, dans une première étape, un mélange brut de α,ω-dihydroxypolydiorganosiloxane, de charge et, le cas échéant, d'autres constituants, dans lequel on libère, dans une deuxième étape, le mélange brut, sous pression réduite, d'inclusions de gaz et on le mélange le cas échéant avec d'autres constituants et dans lequel on mélange, dans une troisième étape, le mélange brut dégazé avec un réticulant qui n'a pas encore été ajouté dans la première ni dans la deuxième étape, avec un catalyseur de condensation et le cas échéant avec d'autres constituants.

2. Procédé selon la revendication 1, dans lequel on utilise, dans la première étape, des mélangeurs internes forcés et/ou des malaxeurs fermés continus.

3. Procédé selon les revendications 1 ou 2, dans lequel on utilise, dans la deuxième étape, des malaxeurs ou des appareils de dégazage.

4. Procédé selon les revendications 1 à 3, dans lequel on utilise, dans la troisième étape, des mélangeurs dynamiques.
